# EUROPÄISCHE PATENTANMELDUNG

(11) **EP 0 881 127 A1**
(43) Veröffentlichungstag der Anmeldung: **02.12.1998**
(21) Anmeldenummer: 98109503.7
(22) Anmeldetag: 26.05.1998
(51) Int. Cl.: B60R 13/10, G09F 7/18

(54) **Wechselhalterung für Schilder, insbesondere für Warntafeln zur Kennzeichnung von Gefahrguttransporten**

(30) Priorität: 28.05.1997 DE 29709371 U
(71) Anmelder: Conrad, Mechthild, 57627 Hachenburg (DE); Strunk, Hans-Ullrich, 57627 Hachenburg (DE); Weber, Edgar, 57645 Nister (DE)
(72) Erfinder: Conrad, Mechthild, 57627 Hachenburg (DE); Strunk, Hans-Ullrich, 57627 Hachenburg (DE); Weber, Edgar, 57645 Nister (DE)

(57) **Zusammenfassung**

Diese Wechselhalterung (8) ist für Schilder vorgesehen, die nicht immer lesbar sein dürfen. Dies ist z.B. bei bestimmten Warntafeln zur Kennzeichnung von Gefahrguttransporten der Fall, wo der Gesetzgeber vorschreibt, daß die auf der Vorderseite der Schildplatte (7) befindlichen Gefahr- und Stoffnummern bei leer und gereinigt fahrenden Transporteinheiten nicht lesbar sein dürfen.
In der Praxis wird diese Forderung bisher dadurch erfüllt, daß die Warntafeln entfernt, zusammengeklappt oder abgedeckt werden.
Die neu entwickelte Wechselhalterung löst das Problem dadurch, daß die Information auf der Vorderseite der Schildplatte (7) durch Wegklappen derselben mit anschließendem Drehen der Schildplatte (7) um 180 um die eigene Längsachse und Wiedereinklappen in die Ausgangslage nicht mehr sichtbar ist, weil die Rückseite der Schildplatte nunmehr nach vorne zeigt.
Erfindungsgemäß geschieht dieser Vorgang wie folgt:
Schnellverschluß (5) öffnen,
Schildplatte (5) mit Lasche (6) um 90° über das Drehscharnier (4) nach vorne klappen,
Schildplatte (7) über das Drehscharnier (4) um 180° in der Längsachse drehen,
Schildplatte (7) wieder in die Ausgangslage klappen und über die Lasche (6) im Schnellverschluß (5) verriegeln.

Das bisherige Entfernen oder Abdecken der Warntafel ist nicht mehr nötig. Diese Wechselhalterung eignet sich auch sehr gut für eine Nachrüstung der im Verkehr befindlichen Fahrzeuge.

## Beschreibung

Schilder sind generell Medien in der visuellen Kommunikation und bieten als solche eine Vielzahl von Informationen dar.

So werden Schilder u.a. eingesetzt als "Warntafeln" zur Kennzeichnung von Gefahrguttransporten. Diese Kennzeichnung von Gefahrguttransporten basiert auf international gültigen gesetzlichen Regelungen.
Diese Regelungen sehen für Gefahrguttransporte aller Art vor, daß die Informationen, welche einen Gefahrguttransport kennzeichnen oder sogar im Hinblick auf die beförderten Stoffe identifizieren und klassifizieren in bestimmten Fällen abgedeckt oder entfernt werden müssen, wobei eine evtl. Abdeckung bei kennzeichnungspflichtigen Gefahrstoffen nach einem Brand von 15 Minuten Dauer noch wirksam sein muß.

Hierzu sind als technische Möglichkeiten bekannt, auf dem Markt eingeführt und über Gebrauchsmusteranmeldungen dokumetiert "ENTFERNEN", "ABDECKEN" und "ZUSAMMENKLAPPEN" als besondere Form des Abdeckens. Das "ENTFERNEN" geschieht z.B. dadurch, daß die Schildplatte direkt vom Fahrzeug weggenommen wird, wo sie meistens einschiebbar in einer Halterung befestigt ist. Das "ABDECKEN" geschieht durch Überzugshauben aus schwerentflammbarem Planenstoff oder auch durch Aufschubtafeln aus Stahlblech.

Das "ZUSAMMENKLAPPEN" erfolgt dadurch, daß bei mittiger horizontaler oder vertikaler Teilung der Schildplatte entsprechende Scharniere und Arretierungen vorgesehen sind.

Die entsprechenden Produkte hierzu sind teilweise bereits seit über 20 Jahren auf dem Markt eingeführt und wie folgt als Gebrauchsmuster dokumentiert:
DE 295 19 947 U1
DE 295 10 156 U1
DE 295 03 638 U1
DE G 82 23 840.5
DE 295 16 182 U1
DE GM 78 13 323

Der im Patentanspruch 1 angegebenen Erfindung liegt das Problem zugrunde, eine Wechselhalterung für Schilder/Warntafeln zu schaffen, welche es ermöglicht, die Kennzeichnungen zu ändern, ohne die Schildplatte zu entfernen, zusammenzuklappen oder durch Überzugshauben resp. Bleche abzudecken.

Dieses Problem wird mit der im Patentanspruch 1 beschriebenen Wechselhalterung für Schildplatten dadurch gelöst, daS diese Schildplatten/Warntafeln nicht direkt am Fahrzeug befestigt sind, sondern über die erfindungsgemäße Wechselhalterung.

Mit der Erfindung wird erreicht, daß die Schildplatte/Warntafel fest über die Wechselhalterung mit dem Fahrzeug verbunden ist, wobei diese Verbindung zum Einen eine dreh- und klappbare Lagerung der Schildplatte vorsieht und zum Anderen die Schildplatte wiederabnehmbar über einen Schnellverschluß in der Wechselhalterung stabil arretiert ist. Die Änderung der Information wird nunmehr dadurch erreicht, daß die Schildplatte aus dem Schnellverschluß gelöst wird, um 90 Grad im Verhältnis zur Befestigungsfläche über das Scharnier nach vorne geklappt wird, anschließend in der Längsachse um 180 Grad gedreht wird und dann wieder in die Befestigungsfläche zurückgeklappt wird, wobei die Schildplatte dann wieder im Schnellverschluß arretiert wird. Die zu ändernde Information befindet sich nunmehr auf der Rückseite der Schildplatte in Bezug auf die bisherige Sichtfläche.

Damit diese Bewegungen problemlos ausgeführt werden können, müssen die beiden Teile der Wechselhalterung links und rechts bzw. oben und unten in Bezug auf die Schildplatte am Fahrzeug befestigt sein.

Mit der Erfindung wird erreicht, daß die Änderung der Information gemäß den gesetzlichen Vorschriften schnell und problemlos erfolgen kann. Da die vorderseitig auf der Schildplatte befindliche Information über die erfindungsgemäße Wechselhalterung von der sichtbaren Vorderseite (Sichtfläche) auf die unsichtbare Rückseite ( Befestigungsseite zum Fahrzeug hin) gedreht wird, sind keinerlei zusätzliche Überzugshauben oder Abdeckbleche notwendig.

Diese Hauben und Abdeckbleche müssen beim derzeitigen Stand der Technik an bestimmten Stellen im Fahrzeug mitgeführt werden, wenn das Fahrzeug kennzeichnungspflichtig ist. Dieses Mitführen der Überzugshauben resp. Abdeckbleche ist äußerst problematisch, da hierfür kaum Platz zur Verfügung steht.

Darüberhinaus gehen die Überzugshauben resp. Abdeckbleche öfters verloren, werden entwendet oder zweckentfremdet eingesetzt (z.B. Überzugshaube als Putzlappen).

Die Erfindung verhindert außerdem das Entwenden oder Auswandern der Schildplatte, welches bei den Einschubhalterungen vorkommen kann und benötigt außerdem keinerlei zusätzliche Hilfsmittel, wie z.B. Schraubendreher.

Eine weitere vorteilhafte Ausgestaltung der Erfindung ist im Patentanspruch 2 angegeben.
Die Fixierung der beiden Einzelteile der Wechselhalterung auf einer Grundplatte stellt eine erhebliche Montageerleichterung dar und garantiert die Funktion.

In den Fällen, wo die Rückseite der Schildplatte montagebedingt ebenfalls lesbar sein kann, wird die entsprechende Information durch die Verwendung der Grundplatte abgedeckt. Weiterhin dient die Grundplatte als Schutz gegen Zerstörung der Wechselhalterung in den Fällen, wo Fahrtwind auf die Rückseite der Schildplatte trifft und somit starke Zugkräfte auf den Schnellverschluß der Wechselhalterung wirken könnten.

Eine weitere vorteilhafte Ausgestaltung der Erfindung ist in den Patentansprüchen 3 und 4 gegeben.
Durch Verwendung zusätzlicher Laschen, welche dauerhaft an der Schildplatte befestigt werden, kann die Wechselhalterung an unterschiedliche Abmessungen und geometrische Gestaltungen der Schildplatte angepaßt werden.

Dieser Aspekt ist besonders wichtig im Hinblick auf die bereits im Verkehr befindlichen Warntafeln, welche somit auch auf die Wechselhalterung umgerüstet werden können. Diese Laschen sind notwendig in all den Fällen, wo die beiden Teile der Wechselhalterung nicht direkt mit der Schildplatte verbunden werden können. Die konstruktive Ausbildung der Lasche ergibt sich somit jeweils individuell aus der Notwendigkeit, die Schildplatten auf der Wechselhalterung zu befestigen unter Berücksichtigung der Montagebedingungen der Wechselhalterung am Fahrzeug.

Eine weitere vorteilhafte Ausgestaltung der Erfindung ist in den Patentansprüchen 5 bis 7 angegeben.
Durch die Abkantung der Halterung oder einen Arretierungsbolzen oder eine Arretierungsöffnung wird der Gegebenheit Rechnung getragen, das Gewicht einer Schildplatte zusätzlich abfangen zu können, um den Schnellverschluß der Wechselhalterung zu entlasten und darüberhinaus eine hochtemperaturbeständige Verbindung zwischen der Schildplatte und der Wechselhalterung zu schaffen, falls der Schnellverschluß aus Materialien hergestellt ist, welche z.B. der Bedingung "... muß nach einem 15-minütigen Brand noch wirksam sein" nicht genügen können.

Eine weitere vorteilhafte Ausgestaltung der Erfindung ist auch darin zu sehen, daß diese Wechselhalterung nicht nur für Warntafeln zur Kennzeichnung von Gefahrguttransporten verwendet werden kann, sondern generell in allen Fällen, wo es darum geht, Informationen, welche auf einer Trägerplatte enthalten sind, von der Sichtfläche auf die der Sichtfläche abgewandte Seite der Trägerplatte zu bringen.

Insofern eignet sich die Wechselhalterung bestens zur dualen Darbietung von Informationen.

Ein Ausführungsbeispiel der Erfindung wird anhand der Figuren 1 bis 3 erläutert. Es zeigen:
- Fig. 1:: Die Wechselhalterung, montiert an eine Warntafel
- Fig. 2:: Den linken Teil der Wechselhalterung mit dem Drehscharnier
- Fig. 3:: Den rechten Teil der Wechselhalterung mit dem Schnellverschluß

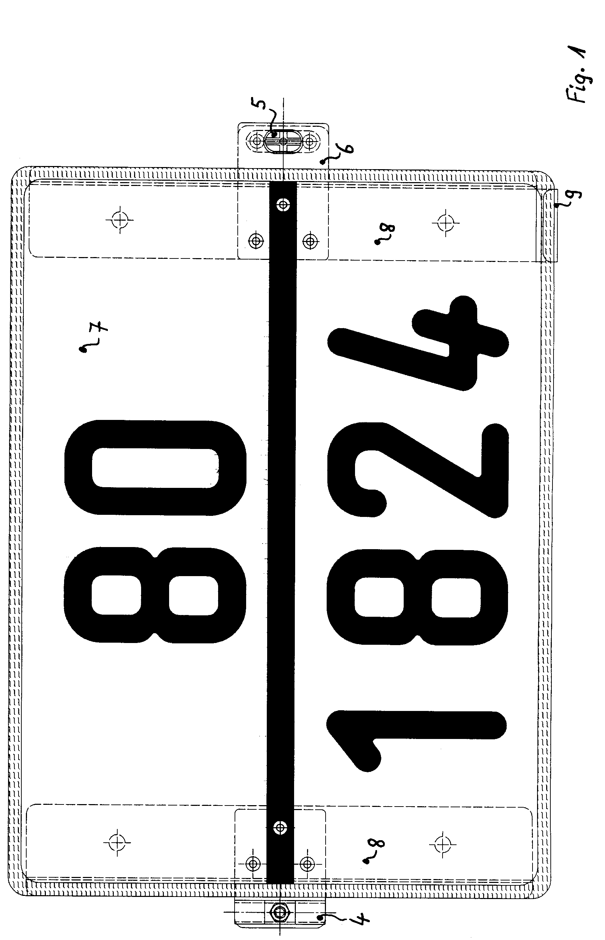

In Figur 1 ist die beispielhafte Anbringung der Wechselhalterung an einer Warntafel (7) dargestellt. Hierbei ist rechts der Schnellverschluß (5) angeordnet, in welchem die Warntafel über eine Lasche (6) arretiert wird. Unten an diesem Teil der Wechselhalterung ist die Abkantung (9) ersichtlich, welche die Warntafel zusätzlich trägt und im Brandfalle stützt. Links ist das Drehscharnier (4) sichtbar.

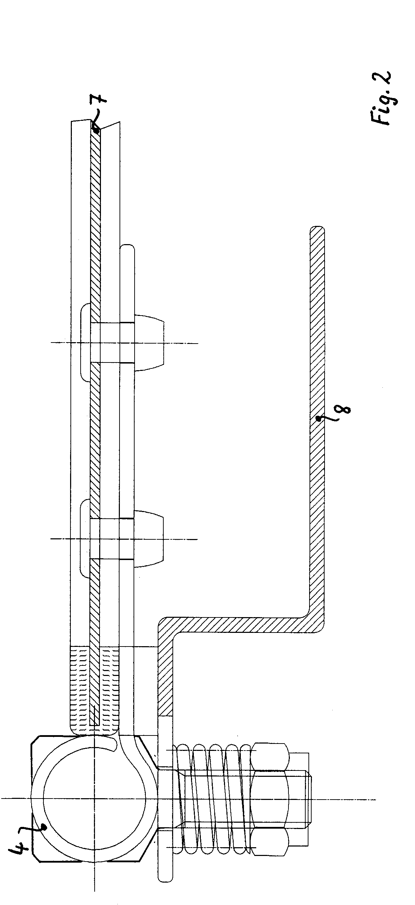

Figur 2 zeigt den linken Teil der Wechselhalterung mit der Befestigung der Warntafel (7) am Drehscharnier (4), welches seinerseits mit der Halterung (8) verschraubt ist.

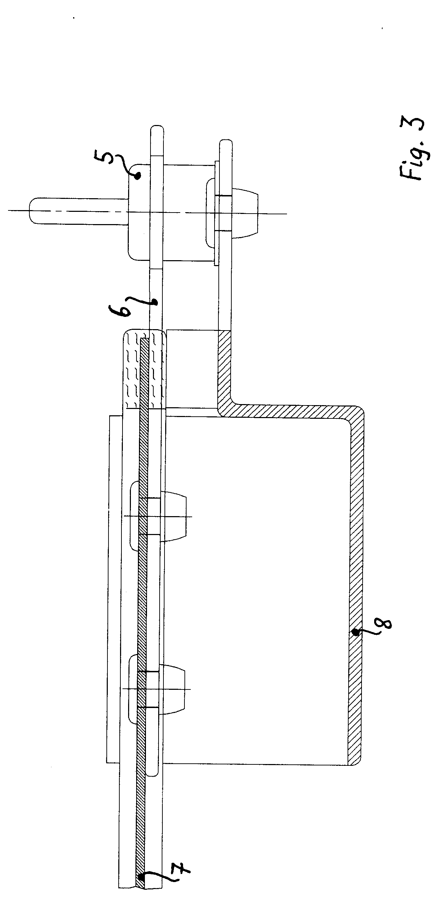

Figur 3 zeigt den rechten Teil der Wechselhalterung, wobei die Schildplatte/Warntafel (7) über die Lasche (6) im Schnellverschluß (5) arretiert ist, der seinerseits mit der Halterung (8) vernietet ist.

## Patentansprüche

1. Wechselhalterung für Schilder/Warntafeln,
dadurch gekennzeichnet,
daß die Halterung (8) zweiteilig ausgeführt ist, wobei ein Teil die Schildplatte (7) wiederabnehmbar über einen Schnellverschluß (5) in der Halterung (8) arretiert und der andere Teil die Schildplatte (7) über ein Drehscharnier (4) dauerhaft mit der Wechselhalterung (8) verbindet und die beiden Teile der Wechselhalterung (8) an jeweils gegenüberliegenden Seiten der Schildplatte (7) angeordnet sind.

2. Wechselhalterung nach Patentanspruch 1,
dadurch gekennzeichnet,
daß die beiden Teile der Wechselhalterung (8) ihrerseits zusätzlich auf einer Grundplatte befestigt sind, um eine vordefinierte Montage auf dem jeweiligen Untergrund zu ermöglichen.

3. Wechselhalterung nach Patentanspruchanspruch 1,
dadurch gekennzeichnet,
daß die Schildplatte (7) über eine dauerhaft angebrachte Lasche (6) im Schnellverschuß (5) der Wechselhalterung (8) wiederabnehmbar arretiert wird.

4. Wechselhalterung nach Patentanspruchanspruch 1,
dadurch gekennzeichet,
daß die Schildplatte (7) über eine dauerhaft angebrachte Lasche fest mit dem Drehscharnier (4) der Wechselhalterung (8) verbunden ist.

5. Wechselhalterung nach Patentanspruch 1,
dadurch gekennzeichnet,
daß der Teil der Wechselhalterung (8), welcher den Schnellverschluß (5) trägt, am unteren Ende nach vorne und nach oben eine Abkantung hat.

6. Wechselhalterung nach Patentanspruch 1,
dadurch gekennzeichnet,
daß der Teil der Wechselhalterung (8), welcher den Schnellverschluß (5) trägt, einen Arretierungsbolzen enthält.

7. Wechselhalterung nach Patentanspruch 1,
dadurch gekennzeichnet,
daß der Teil der Wechselhalterung (8), welcher den Schnellverschluß (5) trägt, eine Arretierungsöffnung enthält.

8. Wechselhalterung nach Patentanspruch 1,
dadurch gekennzeichnet,
daß ein Drehscharnier (4) verwendet wird, welches zum Einen aus einer handelsüblichen Scharnierhälfte besteht, welche jeweils außen gerollt ist zur Aufnahme des Dorns und zum Anderen aus einem runden Bolzen mit Kragen, der am anderen Ende ein Loch besitzt, sodaß der Bolzen dort über den Dorn mit der Scharnierhälfte verbunden werden kann.

9. Wechselhalterung nach Patentanspruch 1,
dadurch gekennzeichnet,
daß ein Drehscharnier (4) verwendet wird, welches zum Einen aus einer handelsüblichen Scharnierhälfte besteht, welche jeweils außen gerollt ist zur Aufnahme des Dorns und zum Anderen aus einem Gewindestift, welcher an einem Ende ein Loch besitzt zum Durchführen des Dornes, wobei dieser Gewindestift dann über den Dorn die Scharnierhälfte mit der Wechselhalterung (8) verbindet unter Verwendung von selbstsichernden Muttern, wobei eine zusätzlich angebrachte Feder zur Verbesserung oder Gewährleistung der Funktion des Drehscharnieres (4) vorhanden sein kann.
